# EUROPEAN PATENT APPLICATION

(11) **EP 4 549 288 A1**
(43) Date of publication of application: **07.05.2025**
(21) Application number: 23872181.5
(22) Date of filing: 22.09.2023
(51) Int. Cl.: B62D 6/00, B62D 5/18, B62D 113/00, B62D 123/00

(54) **WORK MACHINE AND METHOD FOR CONTROLLING WORK MACHINE**

(30) Priority: 28.09.2022 JP 2022154783
(71) Applicant: Komatsu Ltd., Minato-ku Tokyo 107-8414 (JP)
(72) Inventor: TAKENAKA, Yuita, Tokyo 107-8414 (JP)
(74) Representative: Flügel Preissner Schober Seidel
(86) International application number: PCT/JP2023/034532
(87) International publication number: WO 2024/070955

(57) **Abstract**

In the work machine (1), the steering cylinders (9a, 9b) rotate the front frame (11) relative to the rear frame (12). The steering-input device (22) inputs a rotational movement of the front frame (11) relative to the rear frame (12). The first sensor (23) detects the rotation angle of the front frame (11) relative to the rear frame (12). When the controller (25) determines that the front frame (11) is located in an end range of a predetermined angle range based on a detection value of the first sensor (23), the controller (25) executes a speed-limit control, based on the fault state of the first sensor (23), to limit the rotational speed of the front frame (11) corresponding to an input from the steering-input device (22).

## Description

### TECHNICAL FIELD

The present invention relates to a work machine and a control method for a work machine.

### BACKGROUND ART

A work machine with a bending mechanism, such as a wheel loader, includes separate front and rear frames. The vehicle of the work machine is configured to bend, in steering, using the expansion and contraction of a hydraulic cylinder for steering that connects the front and rear frames. Hydraulic oil for driving the hydraulic cylinder is supplied from a hydraulic pump through a main valve.

The front frame is mechanically limited in the steering angle relative to the rear frame. If the front frame comes into contact with the rear frame at the maximum steering angle (at the steering end), a large impact will occur.

Configurations have been proposed for controlling the actual steering speed to be smaller than the steering speed required by a steering-input device, with a sensor for detecting that the front frame is located at the end range of the steering angle, so that the impact can be mitigated (see, for example, Patent Document 1).

### Prior Art Document

### Patent Document

[Patent Document 1] Japanese Patent Application Publication No.2008-44428

### SUMMARY OF INVENTION

However, if the sensor for detecting the rotation angle of the front frame relative to the rear frame is not operating normally, a control to limit the steering speed can be unintentionally executed outside the end range.

It is an object of the present disclosure to provide a work machine and a control method for a work machine, whereby it is made possible to prevent unintentional steering speed limiting from occurring when a sensor therein has a fault.

### (Means for solving the problem)

A work machine according to a first aspect includes a first frame, a second frame, an actuator, an operating member, a first sensor, and a controller. The second frame is connected to the first frame and rotatable within a predetermined angle range relative to the first frame. The actuator is configured to rotate the second frame relative to the first frame. The operating member is configured to input a rotational movement of the second frame relative to the first frame. The first sensor detects a rotation angle of the second frame relative to the first frame. When determining, based on a detection value of the first sensor, that the second frame is located within an end range of the predetermined angle range, the controller is configured to execute a speed limit control to limit a rotation speed of the second frame in response to an input from the operating member, based on a fault state of the first sensor.

### (Effects of the Invention)

According to the present disclosure, it is possible to provide a work machine and a control method for a work machine, whereby it is made possible to prevent unintentional steering speed limiting from occurring when a sensor therein has a fault.

### BRIEF DESCRIPTION OF THE DRAWINGS

FIG. 1 is a side view of a work machine according to Embodiment 1 of the present disclosure.
FIG. 2 is a configuration diagram of the steering system shown in FIG. 1.
FIG. 3 illustrates an allowable rotation range of a front frame relative to a rear frame.
FIG. 4 illustrates the allowable maximum target flow rates set for the frame angles in a first mode.
FIG. 5 illustrates the allowable maximum target flow rates set for the frame angles in a second mode.
FIG. 6 illustrates the allowable maximum target flow rates set for the frame angles in a third mode.
FIG. 7 is a table listing the sensor fault modes and their corresponding detection approaches.
FIG. 8 is a table listing the actual states of sensors, the controller's recognitions of the sensor states, and the corresponding modes to be executed.
FIG. 9 is a flow diagram of a control operation of the work machine according to Embodiment 1 of the present disclosure.
FIG. 10 is a configuration diagram of the steering system of a work machine according to Embodiment 2 of the present disclosure.
FIG. 11 illustrates the allowable maximum target flow rates set for the frame angles, under a soft end-stop control and without the control.
FIG. 12 is a flow diagram of a control operation of the work machine according to Embodiment 2 of the present disclosure.

### DETAILED DESCRIPTION

The work machine according to the present disclosure will be described below with reference to the drawings.

### (Embodiment 1)

### <Configuration>

### (Summary of Work Machine)

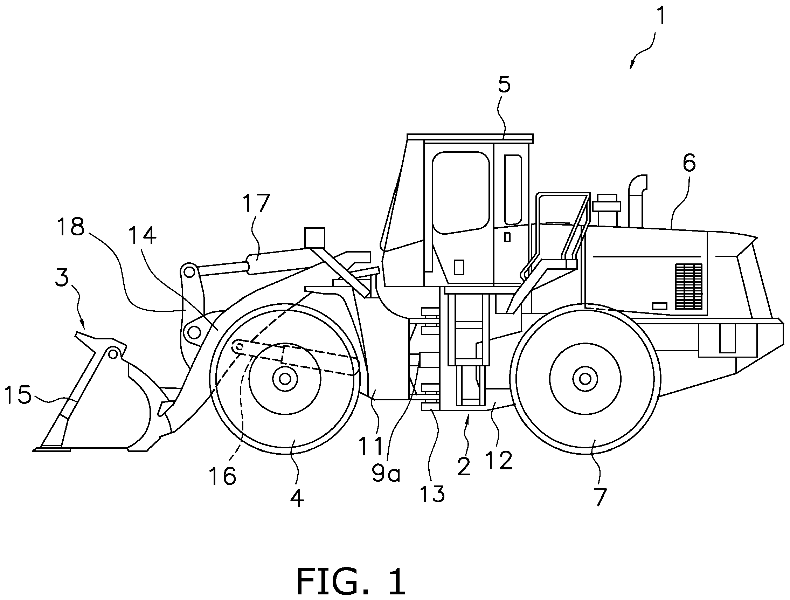

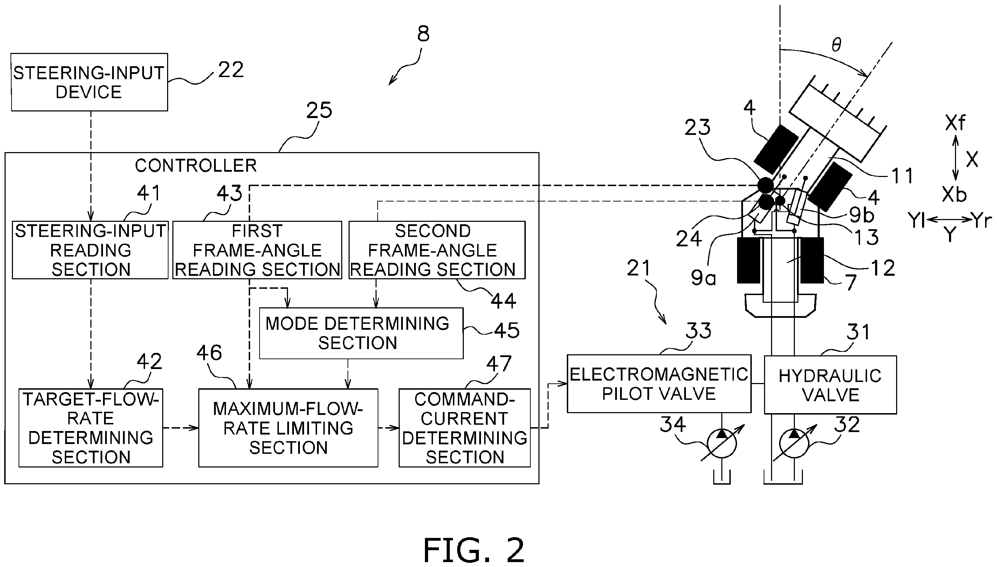

FIG. 1 is a side view of a work machine 1 of Embodiment 1. The work machine 1 of Embodiment 1 includes a vehicular body frame 2, a work equipment 3, a pair of front tires 4, a cab 5, an engine room 6, a pair of rear tires 7, a steering system 8 (see FIG. 2), and steering cylinders 9a and 9b (an example of an actuator).

In the following description, the "front," "rear," "right," "left," "up," and "down" refer to the directions based on the situation as seen from the driver's seat of the work machine 1. Also, the "vehicle-width direction" and "left-right direction" are synonymous.

The work machine 1 uses the work equipment 3 to perform works such as loading soil and sand.

The vehicular body frame 2 is of so-called articulated type, and includes a front frame 11 (an example of the second frame), a rear frame 12 (an example of the first frame), and a connecting shaft portion 13. The front frame 11 is disposed in front of the rear frame 12. The connecting shaft portion 13 is centered in the vehicle-width direction to connect the front frame 11 and the rear frame 12 so that both of them are swingable. The pair of front tires 4 is attached to the left and right sides of the front frame 11, respectively. The pair of rear tires 7 is attached to the left and right sides of the rear frame 12, respectively.

The work equipment 3 is driven by hydraulic oil from a work-equipment pump (not shown). The work equipment 3 includes a boom 14, a bucket 15, a lift cylinder 16, a bucket cylinder 17, and a bell crank 18. The boom 14 is attached to the front frame 11. The bucket 15 is attached to the tip of the boom 14.

The lift cylinder 16 and the bucket cylinder 17 are hydraulic cylinders. One end of the lift cylinder 16 is attached to the front frame 11, and the other end of the lift cylinder 16 is attached to the boom 14. The lift cylinder 16 extends and contracts, causing the boom 14 to swing up and down. One end of the bucket cylinder 17 is attached to the front frame 11, and the other end of the bucket cylinder 17 is attached to the bucket 15 via the bell crank 18. The bucket cylinder 17 expands and contracts, causing the bucket 15 to swing up and down.

The cab 5 is mounted on the rear frame 12. Inside the cab 5, for example, a steering-input device 22 (see FIG. 2) for steering operations, a lever for operating the work equipment 3, and various display devices are arranged. The engine room 6 is mounted on the rear frame 12 behind the cab 5 and houses an engine.

FIG. 2 is a configuration diagram illustrating the steering system 8. The steering system 8 is configured to change the traveling direction of the work machine 1 by changing the flow rate of the oil supplied to the steering cylinders 9a and 9b and changing the frame angle of the front frame 11, that is the rotation angle of the front frame 11, relative to the rear frame 12. In FIG. 2, the forward direction is indicated by an arrow Xf, the rear direction is indicated by an arrow Xb, the right direction is indicated by an arrow Yr, and the left direction is indicated by an arrow Yl.

The pair of steering cylinders 9a and 9b is hydraulically driven. The pair of steering cylinders 9a and 9b is respectively arranged side by side on the left and right sides of the connecting shaft portion 13 in the vehicle-width direction. The steering cylinder 9a is positioned on the left side of the connecting shaft portion 13. The steering cylinder 9b is positioned on the right side of the connecting shaft portion 13. One end of each of the steering cylinders 9a, 9b is attached to the front frame 11, and the other end of each of the steering cylinders 9a, 9b is attached to the rear frame 12.

The steering cylinder 9a includes a cylinder chamber (not shown) including an extension chamber and a contraction chamber that are separated by a piston. When hydraulic oil is supplied to the extension chamber, the piston moves to extend the steering cylinder 9a. When hydraulic oil is supplied to the contraction chamber, the piston moves to contract the steering cylinder 9a.

Furthermore, the steering cylinder 9b includes a cylinder chamber including an extension chamber and a contraction chamber that are separated by a piston. When hydraulic oil is supplied to the extension chamber, the piston moves and the steering cylinder 9b extends, and when hydraulic oil is supplied to the contraction chamber, the piston moves and the steering cylinder 9b contracts.

When the steering cylinder 9a is extended and the steering cylinder 9b is contracted, the frame angle changes, causing the vehicle to turn right (see Yr in Fig. 2). Conversely, when the steering cylinder 9a is contracted and the steering cylinder 9b is extended, the frame angle changes, causing the vehicle to turn left (see Yl in Fig. 2).

### (Steering System 8)

The steering system 8 includes a hydraulic circuit 21, a steering-input device 22 (an example of the operating member), a first sensor 23, a second sensor 24, and a controller 25 (an example of the controller). The hydraulic circuit 21 is configured to adjust the output drive of the steering cylinders 9a and 9b. In FIG. 2, the transmission of electrical signals is indicated by dotted lines, and the transmission of hydraulic pressure is indicated by solid lines.

The steering-input device 22 may be, for example, a steering wheel or a joystick lever. An operator manipulates the steering-input device 22 to input a rotational movement of the front frame 11 relative to the rear frame 12. The front frame 11 rotates relative to the rear frame 12 at a rotation speed (steering speed) corresponding to the degree of manipulation of the steering-input device 22. The degree of manipulations of the steering-input device 22 correspond to target values of the flow rate of hydraulic oil supplied to the steering cylinders 9a and 9b.

The first sensor 23 detects a frame angle, which is the rotation angle of the front frame 11 relative to the rear frame 12. The second sensor 24 detects a frame angle, which is a rotation angle of the front frame 11 relative to the rear frame 12. The first sensor 23 and the second sensor 24 may be, for example, angle sensors configured to detect the rotation angle of the connecting shaft portion 13. Alternatively, the first sensor 23 and the second sensor 24 may be, for example, stroke sensors configured to detect the strokes of the steering cylinders 9a, 9b. The first sensor 23 and the second sensor 24 do not need to be the same type of sensor and may be different types of sensors from the viewpoint of redundancy. For example, one of the first sensor 23 and the second sensor 24 may be an angle sensor, while the other may be a stroke sensor.

### (Hydraulic Circuit 21)

The hydraulic circuit 21 includes a hydraulic valve 31 (one example of the valve), a main pump 32, an electromagnetic pilot valve 33, and a pilot pump 34. The hydraulic valve 31 is a flow-rate control valve that adjusts the flow rate of oil supplied to the steering cylinders 9a and 9b according to the input pilot pressure. For example, the hydraulic valve 31 may be a spool valve. The main pump 32 supplies hydraulic oil to the hydraulic valve 31, which operates the steering cylinders 9a and 9b.

The hydraulic valve 31 includes a valve body (not shown) that may be, for example, a spool. The valve body is movable to a left steering position, a neutral position, and a right steering position. When the valve body of the hydraulic valve 31 is placed in the left steering position, the steering cylinder 9a contracts, and the steering cylinder 9b expands, reducing the frame angle and causing the vehicle body to turn left. It should be noted that the frame angle θ is set to 0 degrees when the front frame 11 is aligned in the front-rear direction (see the arrows Xf and Xb) relative to the rear frame 12. Negative values indicate frame angles when the front frame 11 rotates leftward relative to the rear frame 12, and positive values indicate frame angles when the front frame 11 rotates rightward relative to the rear frame 12.

When the valve body of the hydraulic valve 31 is located at the right steering position, the steering cylinder 9b contracts, and the steering cylinder 9a expands, increasing the frame angle θ to cause the vehicle body to turn to the right. When the valve body of the hydraulic valve 31 is located at the neutral position, the frame angle does not change. As the valve body moves from the neutral position toward the right steering position in response to the supplied pilot pressure, the opening degree increase, which increases the amount of hydraulic oil supplied to the extension chamber of the steering cylinder 9a and the contraction chamber of the steering cylinder 9b. The amount of hydraulic oil supplied to the extension chamber of the steering cylinder 9a and the contraction chamber of the steering cylinder 9b is maximum when the valve body is located at the right steering position. As the valve body moves from the neutral position toward the left steering position in response to the supplied pilot pressure, the opening degree increase, which increases the amount of hydraulic oil supplied to the contraction chamber of the steering cylinder 9a and the extension chamber of the steering cylinder 9b. The amount of hydraulic oil supplied to the contraction chamber of the steering cylinder 9a and the extension chamber of the steering cylinder 9b is maximum when the valve body is located at the left steering position.

The electromagnetic pilot valve 33 is a flow rate control valve that adjusts the flow rate or pressure of the pilot hydraulic pressure supplied to the hydraulic valve 31 in response to a command from the controller 25. The pilot pump 34 supplies hydraulic oil to the electromagnetic pilot valve 33 for operating the hydraulic valve 31. The electromagnetic pilot valve 33 may be, for example, a spool valve, and is controlled in response to a command from the controller 25.

The electromagnetic pilot valve 33 includes a valve body (not shown) that may be, for example, a spool. The valve body is movable to a left pilot position, a neutral position, and a right pilot position. When the valve body of the electromagnetic pilot valve 33 is located at the left pilot position, the hydraulic valve 31 is in the left steering position. When the valve body of the electromagnetic pilot valve 33 is located at the right pilot position, the hydraulic valve 31 is in the right steering position. When the valve body of the electromagnetic pilot valve 33 is located at the neutral position, the hydraulic valve 31 is in the neutral position.

When the pilot pressure or pilot flow rate from the electromagnetic pilot valve 33 is adjusted according to a flow rate command from the controller 25, the hydraulic valve 31 is controlled, in turn, the steering cylinders 9a and 9b is controlled. The flow rate command is a value specifying the flow rate of hydraulic oil supplied from the hydraulic valve 31 to the steering cylinders 9a and 9b.

As the valve body of the electromagnetic pilot valve 33 moves from the neutral position toward the right pilot position through manipulation of the steering-input device 22, the flow rate that moves the valve body of the hydraulic valve 31 toward the right steering position increases. When the valve body reaches the right pilot position, the flow rate for steering to the right reaches 100%. Similarly, as the valve body of the electromagnetic pilot valve 33 moves from the neutral position toward the left pilot position through manipulation of the steering-input device 22, the flow rate that moves the valve body of the hydraulic valve 31 toward the left steering position increases. When the valve body reaches the left pilot position, the flow rate for steering to the left reaches 100%. It should be noted that the flow rates for steering to the right are indicated by positive values, while the flow rates for steering to the left is indicated by negative values.

When the steering-input device 22 is manipulated from a state where the valve body of the electromagnetic pilot valve 33 is in the neutral position, the greater the degree of manipulation, the greater the valve body moves toward the right pilot position or the left pilot position. As a result, the valve body of the hydraulic valve 31 moves significantly toward the right steering position or the left steering position, and the amount of hydraulic oil supplied to the steering cylinders 9a, 9b increases.

### (Controller 25)

The controller 25 includes a processor and a storage device. The processor may be, for example, a Central Processing Unit (CPU). Alternatively, the processor may be different from the CPU. The processor executes processing for controlling the work machine 1 according to a program. The storage device includes non-volatile memory such as Read Only Memory (ROM) and volatile memory such as Random Access Memory (RAM). The storage device may include an auxiliary storage device such as a hard disk or a Solid State Drive (SSD). The storage device is an example of a non-transitory computer-readable recording medium. The storage device stores programs and data for controlling the work machine 1. The storage device stores, for example, data of the end range, the first mode, the second mode, and the third mode, which will be described later.

The controller 25 instructs the hydraulic circuit 21 to adjust the output drive of the steering cylinders 9a and 9b, based on the manipulation of the steering-input device 22, the detection value of the first sensor 23, and the detection value of the second sensor 24.

The controller 25 includes a steering-input reading section 41, a target-flow-rate determining section 42, a first frame-angle reading section 43, a second frame-angle reading section 44, a mode determining section 45, a maximum-flow-rate limiting section 46, and a command-current determining section 47. The processor executes programs stored in the memory to perform the functions of the steering-input reading section 41, the target-flow-rate determining section 42, the first frame-angle reading section 43, the second frame-angle reading section 44, the mode determining section 45, the maximum-flow-rate limiting section 46, and the command-current determining section 47.

The steering-input reading section 41 is configured to read the manipulations of the steering-input device 22. The manipulations of the steering-input device 22 include the steering direction and the steering amount. The target-flow-rate determining section 42 is configured to determine the target flow rate of the hydraulic oil to be supplied to the steering cylinders 9a, 9b based on a manipulation of the steering-input device 22 read by the steering-input reading section 41. The first frame-angle reading section 43 is configured to read a signal including a state of the first sensor 23 and a detection value of the first sensor 23. The second frame-angle reading section 44 is configured to read a signal including a state of the second sensor 24 and a detection value of the second sensor 24. The mode determining section 45 is configured to determine which of the first mode (an example of a first control), the second mode (an example of a second control), or the third mode (an example of a third control) to execute based on the signals from the first sensor 23 and the second sensor 24. The first, second, and third modes, details of which will be described later, are controls for limiting the steering speed so that the front frame 11 does not come into contact with the rear frame 12 with a large impact. These modes limit the steering speed differently. The first and second modes limit the steering speed at the end range of the rotatable range, which will be described later. The third mode limits the steering speed throughout the entire rotatable range.

The maximum-flow-rate limiting section 46 is configured to determine the allowable maximum target flow rate of hydraulic oil to be supplied to the steering cylinders 9a and 9b based on the mode determined by the mode determining section 45. When the target flow rate determined by the target-flow-rate determining section 42 exceeds the allowable maximum target flow rate, the maximum-flow-rate limiting section 46 limits the target flow rate to the allowable maximum target flow rate and outputs the limited target flow rate to the command-current determining section 47. When the target flow rate determined by the target-flow-rate determining section 42 is equal to or less than the allowable maximum target flow rate, the maximum-flow-rate limiting section 46 outputs the target flow rate determined by the target-flow-rate determining section 42 to the command-current determining section 47. The command-current determining section 47 is configured to output a command current to instruct the electromagnetic pilot valve 33 on its degree of opening so that the target flow rate is supplied to the steering cylinders 9a, 9b.

### (Rotatable Range, End Range)

Next, the above-mentioned rotatable range (an example of the predetermined angle range) and end range will be described.

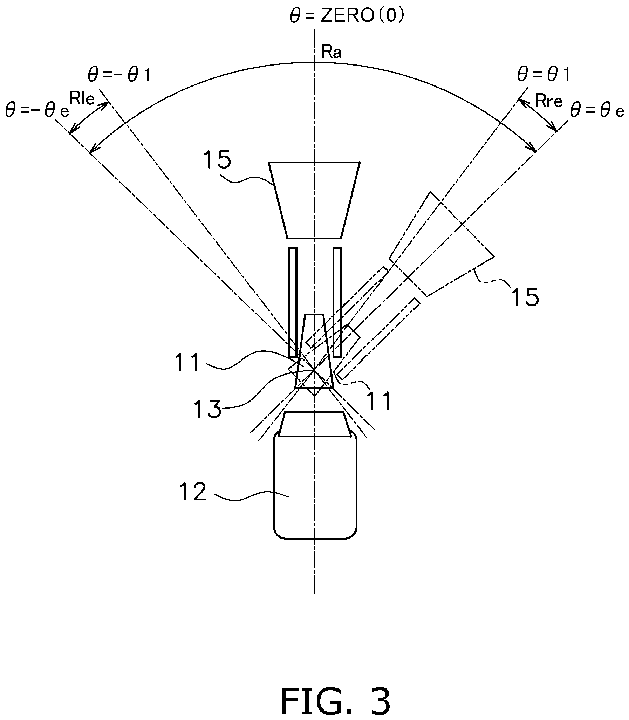

FIG. 3 is a schematic diagram illustrating the rotatable range Ra of the front frame 11 relative to the rear frame 12. In FIG. 3, the front frame 11, rear frame 12, and bucket 15 are schematically illustrated.

The front frame 11 is connected to the rear frame 12 to turn around the connecting shaft portion 13, and the frames physically come into contact with each other. Hence, the front frame 11 is able to turn relative to the rear frame 12 within the rotatable range Ra.

As illustrated by the front frame 11 of the solid line in FIG. 3, the frame angle θ is set to zero when the front frame 11 is disposed along the front-rear direction relative to the rear frame 12. In FIG. 3, specifically, the frame angle θ is set to zero when the center line of the rear frame 12 in the width direction coincides with the center line of the front frame 11 in the width direction. The frame angle θ is defined as an angle between the center line of the rear frame 12 in the width direction and the center line of the front frame 11 in the width direction. The frame angle θ is indicated as a positive value when the front frame 11 turns rightward relative to the rear frame 12, and the frame angle θ is indicated as a negative value when the front frame 11 turns leftward relative to the rear frame 12.

As a result, the rotatable range Ra is set to be within the frame angle θ, from +θe degrees to -θe degrees. In other words, when turning rightward by θe degrees relative to the rear frame 12, the front frame 11 comes into contact with the rear frame 12 and cannot turn further to the right. Similarly, when turning by θe degrees to the left relative to the rear frame 12, the front frame 11 comes into contact with the rear frame 12 and cannot turn any further to the left.

The position in which the frame angle θ is +θe degrees is the right end of the rotatable range Ra, and the position in which the frame angle θ is -θe degrees is the left end of the rotatable range Ra. Fig. 3 illustrates the front frame 11 and the bucket 15, by two-dot chain lines, which are turned up to the right end of the rotatable range Ra. The angles +θe and -θe are also referred to as steering ends.

Within the rotatable range Ra, the end range is defined as a predetermined range that is close to the right end and includes the right end, and a predetermined range that is close to the left end and includes the left end.

Within the rotatable range Ra, the predetermined range close to the right end is defined as an end range Rre, and the predetermined range close to the left end is defined as an end range Rle. The end range Rre may be within the frame angles θ, from +θ1 degrees to +θe degrees, wherein the +θ1 is the threshold value of the right end range Rre. The end range Rre may be set to, for example, about 10 degrees. The end range Rle may be within the frame angles θ, from -θ1 degrees to -θe degrees, wherein the -θ1 is the threshold value of the left end range Rle. The end range Rle may be set to, for example, about 10 degrees.

In other words, when the frame angle θ calculated from the values detected from the first sensor 23 and the second sensor 24 is within the range of +θ1 to +θe or -θ1 to -θe, the controller 25 determines that the front frame 11 is located within the end range.

### (First Mode)

Next, the first mode for mitigating the impact caused by the contact of the front frame 11 with the rear frame 12 will be described.

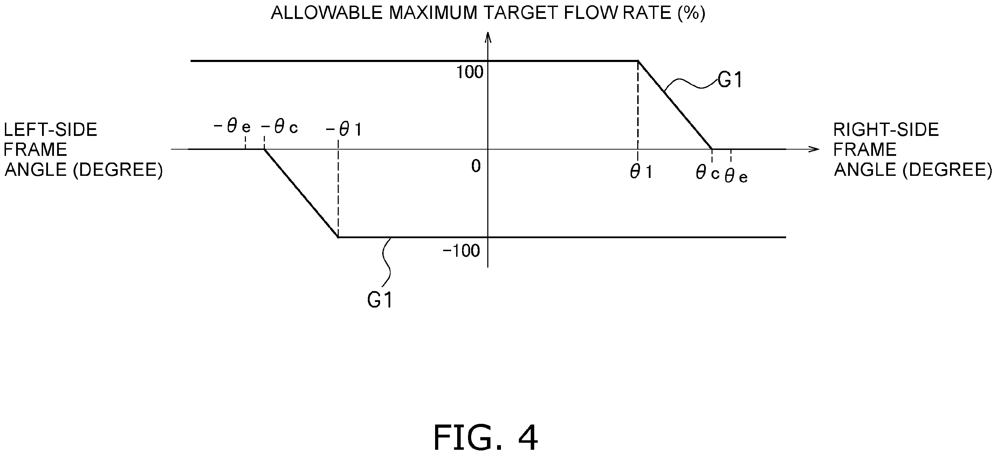

FIG. 4 is a diagram illustrating the allowable maximum target flow rate for the frame angle in the first mode. The horizontal axis indicates the frame angle θ. On the horizontal axis, the frame angle at the origin is 0°, a positive value indicates a frame angle in the right direction, and a negative value indicates a frame angle in the left direction. The vertical axis indicates the percentage (%) of the allowable maximum target flow rate to the maximum target flow rate that can be set by the steering-input device 22. On the vertical axis, the set maximum target flow rate at the origin is 0%, a positive value indicates the allowable maximum target flow rate in steering into the right direction, and a negative value indicates the allowable maximum target flow rate in steering into the left direction.

As illustrated in the graph G1 of the first mode in FIG. 4, for steering to the right, the allowable maximum target flow rate is 100% within the frame angle range of -θe to θ1, and there is no limit on the maximum target flow rate. In other words, a target flow rate is determined according to a degree of manipulation of the steering-input device 22. When the steering is operated to the right, and the front frame 11 is located in the end range Rre (within the frame angles from θ1 to θe), a limit is set on the maximum target flow rate. That is, when the target flow rate corresponding to the degree of manipulation of the steering-input device 22 exceeds the allowable maximum target flow rate, the target flow rate is limited to fall onto the allowable maximum target flow rate. Specifically, the allowable maximum target flow rate is set to gradually decrease as the frame angle θ1 moves to the frame angle θe, and the allowable maximum target flow rate is set to 0 (%) at the frame angle θc before the frame angle θe. At the frame angle θc or further, no hydraulic oil is supplied to the steering cylinders 9a, 9b even when the steering-input device 22 is manipulated further to rotate the front frame 11 to the right.

As described above, for steering to the right, in the frame angle range of -θe to θ1, there is no limit on the allowable maximum target flow rate, and, therefore, no limit on the maximum steering speed. In contrast, in the end range Rre, the allowable maximum target flow rate of the hydraulic oil supplied to the steering cylinders 9a and 9b is limited, and, consequently, the steering speed is also limited. When steering to the right, the maximum steering speed is set to gradually decrease as the frame angle θ1 moves to the frame angle θe, and the steering speed is set to 0 at the frame angle θc before the frame angle θe.

When steering to the left, in the frame angle range of -θ1 to θe, the allowable maximum target flow rate is -100%, and there is no limit on the maximum target flow rate. That is, a target flow rate is determined according to a degree of manipulation of the steering-input device 22. When steering to the left, and the front frame 11 is located in the end range Rle (within the frame angles from -θe to -θe), a limit is set to the maximum target flow rate. That is, when the target flow rate corresponding to the degree of manipulation of the steering-input device 22 exceeds the allowable maximum target flow rate, the target flow rate is limited to fall onto the allowable maximum target flow rate. Specifically, the allowable maximum target flow rate is set to gradually decrease as the frame angle -θ1 moves to the frame angle -θe, and the allowable maximum target flow rate is set to zero at a frame angle -θc before the frame angle - θe. At the frame angle -θc or further, no hydraulic oil is supplied to the steering cylinders 9a, 9b even when the steering-input device 22 is manipulated further to rotate the front frame 11 to the left.

As described above, for steering to the left, in the range of frame angles from -θ1 to θe, there is no limit on the allowable maximum target flow rate, and therefore, no limit is set on the maximum steering speed. In contrast, in the end range Rle, the allowable maximum target flow rate of the hydraulic oil supplied to the steering cylinders 9a and 9b is limited, and, consequently, the steering speed is also limited. When steering to the left, the maximum steering speed is set to gradually decrease as the frame angle moves from -θ1 to -θe, and the steering speed is set to 0 at the frame angle -θc before the frame angle -θe.

In this way, the allowable maximum target flow rate decreases toward the ends of the rotatable range Ra, and the allowable maximum target flow rate is set to zero at positions before the ends. This makes it possible to prevent the front frame 11 from contacting the rear frame 12. Even when the front frame 11 contacts the rear frame 12 due to the inertial force caused by the weight of the load or the like, the impact can be mitigated because the steering speed has been decreased.

### (Second Mode)

Next, the second mode for mitigating the impact caused by the contact of the front frame 11 with the rear frame 12 will be described.

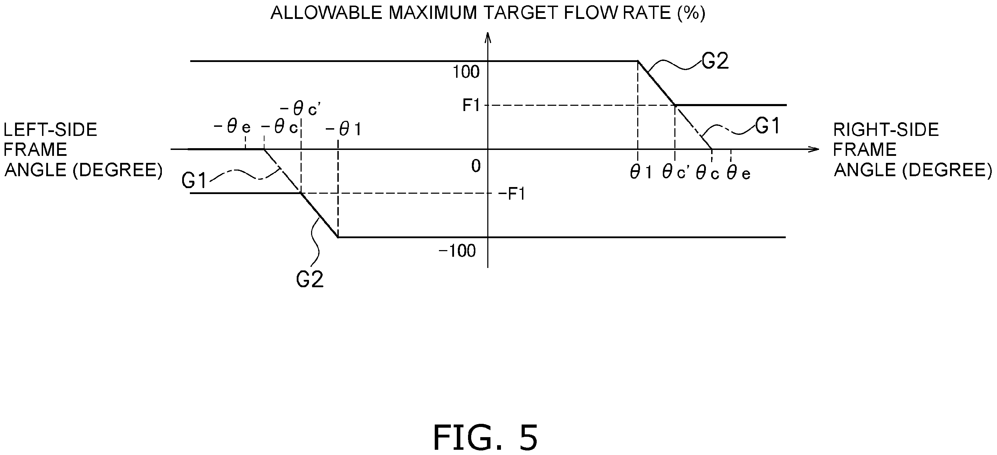

FIG. 5 is a diagram illustrating the allowable maximum target flow rates for frame angles in the second mode. The horizontal axis indicates the frame angle θ. On the horizontal axis, the frame angle at the origin is 0°, a positive value indicates a frame angle to the right, and a negative value indicates a frame angle to the left. The vertical axis indicates the ratio (%) of the allowable maximum target flow rate to the maximum target flow rate that can be set by the steering-input device 22. On the vertical axis, the set maximum target flow rate at the origin is 0%, a positive value indicates the allowable maximum target flow rate in steering operation to the right, and a negative value indicates the allowable maximum target flow rate in steering operation to the left. It should be noted that in FIG. 5, the graph G1 of the first mode is shown by an alternate long and short dash line.

As shown in graph G2 of the second mode in FIG. 5, for steering to the right, in the frame angle range of -θe to θ1, the allowable maximum target flow rate is 100% and no limit is set on the maximum target flow rate. That is, a target flow rate is determined according to a degree of manipulation of the steering-input device 22. When steering to the right, and the front frame 11 is located in the end range Rre (within the frame angles from θ1 to θe), a limit is set on the maximum target flow rate. That is, when the target flow rate corresponding to the degree of manipulation of the steering-input device 22 exceeds the allowable maximum target flow rate, the target flow rate is limited to fall onto the allowable maximum target flow rate. As the frame angle θ1 moves to the frame angle θe, the allowable maximum target flow rate is set to gradually decrease, and is set to a predetermined allowable maximum target flow rate F1 (%) at frame angle θc' before frame angle θe. From frame angle θc' to frame angle θe, the allowable maximum target flow rate is limited to the flow rate F1 (%).

As described above, for steering to the right, in the frame angle range of -θe to θ1, there is no limit on the allowable maximum target flow rate, and, therefore, no limit on the maximum steering speed. In contrast, in the end range Rre, the allowable maximum target flow rate of the hydraulic oil supplied to the steering cylinders 9a and 9b is limited, and, consequently, the steering speed is also limited. When steering to the right, the maximum steering speed gradually decreases as the frame angle θ1 moves to the frame angle θe, and at a frame angle θc' before the frame angle θe, the maximum steering speed is limited to a speed corresponding to the flow rate F1.

When steering to the left, the allowable target flow rate is -100% in the frame angle range of -θ1 to θe, and there is no limit on the maximum target flow rate. That is, the target flow rate is determined according to the degree of manipulation of the steering-input device 22. When steering to the left, and the front frame 11 is located in the end range Rle (within the frame angles from -θ1 to -θe), there is a limit on the maximum target flow rate. That is, when the target flow rate corresponding to the degree of manipulation of the steering-input device 22 exceeds the allowable maximum target flow rate, the target flow rate is limited to the allowable maximum target flow rate. Specifically, the allowable maximum target flow rate is set to gradually decrease as the frame angle -θ1 moves to the frame angle -θe, and is set to fall on a predetermined allowable maximum target flow rate -F1 (%) at the frame angle -θc' before the frame angle -θe. From the frame angle -θc' to the frame angle -θe, the allowable maximum target flow rate is set to the flow rate -F1 (%).

As described above, for steering to the left, in the range of frame angles from -θ1 to θe, there is no limit on the allowable maximum target flow rate, and, therefore, no limit is set on the maximum steering speed. In contrast, in the end range Rle, the allowable maximum target flow rate of the hydraulic oil supplied to the steering cylinders 9a and 9b is limited, and, consequently, the steering speed is also limited. When steering to the left, the maximum steering speed gradually decreases as the frame angle -θ1 moves to the frame angle -θe, and at the frame angle -θc' before the frame angle -θe, the maximum steering speed is limited to a speed corresponding to the flow rate F1.

There is no restriction in setting the allowable maximum target flow rate ±F1(%), but it can be set to a flow rate that limits the maximum steering speed to about half, for example.

In this way, the allowable maximum target flow rate decreases toward the end of the rotatable range Ra, and the allowable maximum target flow rate is set to F1(%) before the end. Since the allowable maximum target flow rate F1 (%) is set to a moderate level, when the front frame 11 comes into contact with the rear frame 12, the steering speed is slow, which mitigates the impact.

### (Third Mode)

Next, the third mode will be described.

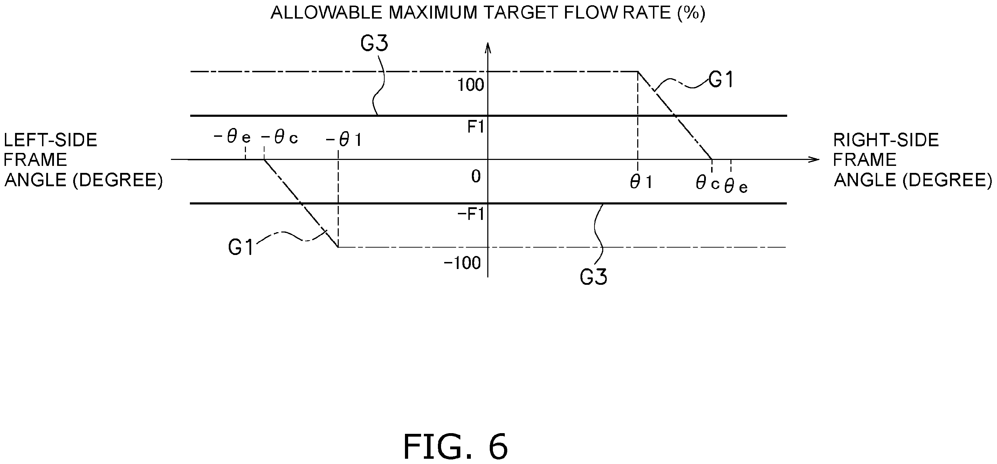

FIG. 6 is a diagram illustrating the allowable maximum target flow rates for the frame angles in the third mode. The horizontal axis indicates the frame angle θ. On the horizontal axis, the frame angle at the origin is 0°, a positive value indicates a frame angle to the right, and a negative value indicates a frame angle to the left. The vertical axis indicates the ratio (%) of the allowable maximum target flow rate to the maximum target flow rate that can be set by the steering-input device 22. On the vertical axis, the set maximum target flow rate at the origin is 0%, a positive value indicates the allowable maximum target flow rate in steering operation to the right, and a negative value indicates the allowable maximum target flow rate in steering operation to the left. It should be noted that in FIG. 6, the graph G1 of the first mode is shown by an alternate long and short dash line.

As illustrated in graph G3 of the third mode in FIG. 6, the allowable maximum target flow rate is limited to F1 (%) over the entire range of the rotatable range Ra (the frame angles from -θe to +θe) in the third mode. That is, for steering to the right, the allowable maximum target flow rate (%) is set to F1 (%), and for steering to the left, the allowable maximum target flow rate (%) is set to -F1 (%).

Since the allowable maximum target flow rate F1 (%) is set to be smaller than 100% in the entire steering range, the maximum steering speed is limited in the entire range, and the impact can be mitigated when the front frame 11 comes into contact with the rear frame 12.

Here, the control by the first sensor 23 or the second sensor 24 for detecting that the front frame 11 is located in the end range to limit the steering speed by limiting the flow rate of hydraulic oil is defined as soft end-stop control (an example of speed limit control). With this definition, the above-mentioned first and second modes are included in the soft end-stop control, but the third mode is not included in the soft end-stop control because the flow rate of hydraulic oil is limited in the entire range.

In other words, it can be said that the soft end-stop control is being executed while the first and second modes are being executed, and it can be said that the soft end-stop control is not being executed while the third mode is being executed.

As described above, the mode determining section 45 selects whether to execute the first mode, the second mode, or the third mode based on a fault state of the first sensor 23 and a fault state of the second sensor 24.

### (Fault States of First Sensor 23 and Second Sensor 24)

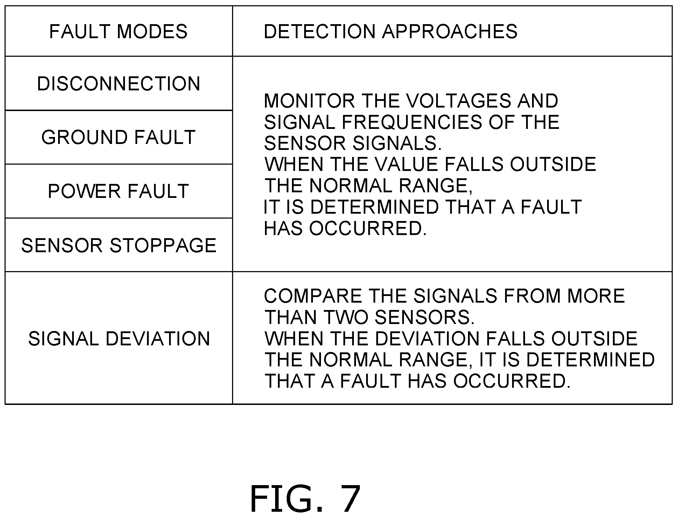

The fault states of the first sensor 23 and the second sensor 24 will be described. FIG. 7 is a table showing the fault modes of the sensors and their corresponding detection approaches.

The fault modes of the first sensor 23 and the second sensor 24 include disconnection, ground fault, power fault, sensor stoppage, and signal deviation. The disconnection occurs in the sensors or the lines connecting the sensors and the controller 25. The ground fault is an electrical contact of the sensor signal line with the ground. The power fault is an electrical contact of the sensor signal line with the power supply. The sensor stoppage is caused by a failure or malfunction of the IC chip included in the sensors. The mode determining section 45 monitors the voltage and signal frequency of the sensor signals, and when these values do not fall within the normal range, the mode determining section 45 determines that one of the faults, including disconnection, ground fault, power fault, or sensor stoppage, has occurred. While the values are within the normal range, the mode determining section 45 determines that the sensors are functioning correctly.

A signal deviation fault is defined as a deviation between detected signals, causing an erroneous detection of a frame angle. To detect a signal deviation fault, either signals output from two or more sensors or two signal outputs from a single sensor are required. The mode determining section 45 compares the two or more signals and determines that a signal deviation fault has occurred when the deviation does not fall in the normal range, or confirms no signal deviation fault when the deviation is within the normal range.

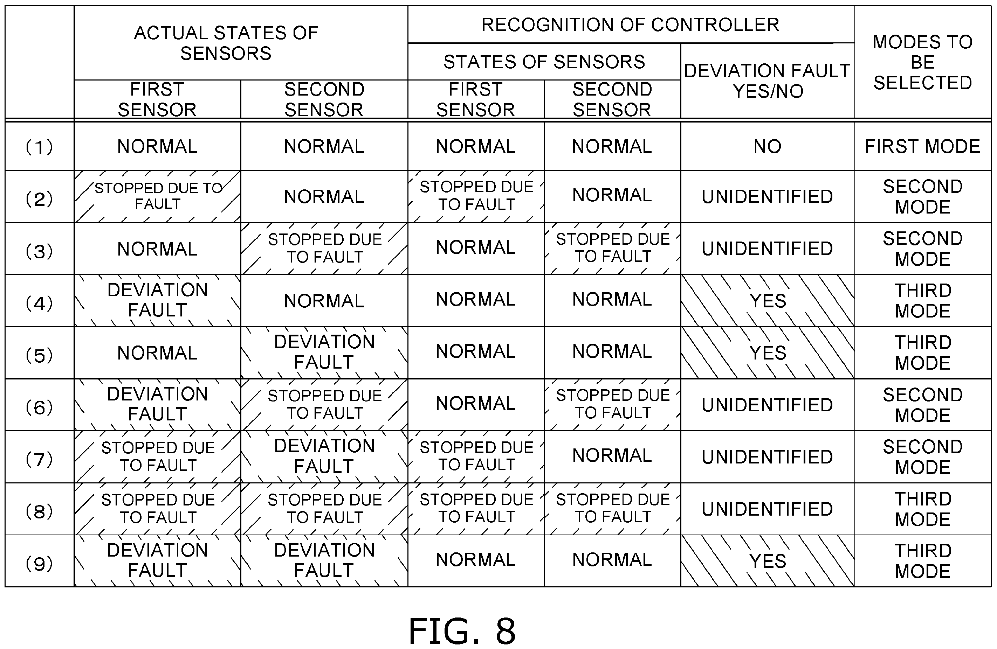

Next, the determination of the fault states of the sensors and the selection of the modes to be executed will be described. FIG. 8 is a table showing the actual states of the sensors, the recognition of the sensor states by the controller 25, and the corresponding modes to be selected. As shown in FIG. 8, the actual states of the two sensors are categorized in nine states (1) to (9).

In State (1), both the first sensor 23 and the second sensor 24 are normally operating. In State (1), the mode determining section 45 of the controller 25 determines that both the first sensor 23 and the second sensor 24 are normal based on the signals read by the first frame-angle reading section 43 and the second frame-angle reading section 44. When both the first sensor 23 and the second sensor 24 are normally operating, the deviation between the two signals is within the normal range. As a result, the mode determining section 45 determines that no deviation fault has occurred. The mode determining section 45 selects the first mode when it determines that the first sensor 23 is functioning normally, the second sensor 24 is functioning normally, and there is no deviation fault.

In State (2), the first sensor 23 has a fault and stopped functioning, while the second sensor 24 is functioning normally. The mode determining section 45 of the controller 25 determines the fault of the first sensor 23 based on the signal read by the first frame-angle reading section 43. The mode determining section 45 determines that the second sensor 24 is functioning normally based on the signal from the second frame-angle reading section 44. Since the first sensor 23 has stopped due to a fault, the mode determining section 45 cannot determine whether a deviation fault has occurred, resulting in an unidentified determination. When determining that the first sensor 23 has stopped abnormally and that the second sensor 24 remains normal, the mode determining section 45 selects the second mode.

In State (3), the first sensor 23 is functioning normally, while the second sensor 24 has a fault and stopped functioning. In State (3), the mode determining section 45 of the controller 25 determines that the first sensor 23 is functioning normally based on the signal read by the first frame-angle reading section 43. The mode determining section 45 also determines that the second sensor 24 has a fault and stopped functioning based on the signal read by the second frame-angle reading section 44. Since the second sensor 24 has a fault and stopped functioning, the mode determining section 45 cannot determine whether a deviation fault has occurred, resulting in an unidentified determination. When determining that the first sensor 23 is functioning normally and that the second sensor 24 has stopped abnormally, the mode determining section 45 selects the second mode.

In State (4), the first sensor 23 has a fault and exhibited deviation, while the second sensor 24 is functioning normally. In State (4), the mode determining section 45 of the controller 25 determines that the first sensor 23 is functioning normally based on the signal read by the first frame-angle reading section 43. A deviation fault cannot be determined by a signal from one sensor, and, therefore, the first sensor 23 is determined to be functioning normally. The mode determining section 45 determines that the second sensor 24 is functioning normally based on the signal from the second frame-angle reading section 44. Since the first sensor 23 has a fault and exhibited deviation, the deviation between the signals from the two sensors does not fall in the normal range. As a result, the mode determining section 45 determines that a deviation fault has occurred. The mode determining section 45 selects the third mode when it determines that the first sensor 23 is functioning normally while the second sensor 24 is functioning normally and that a deviation fault has occurred.

In State (5), the first sensor 23 is functioning normally, while the second sensor 24 has a fault and exhibited deviation. In State (5), the mode determining section 45 of the controller 25 determines that the first sensor 23 is functioning normally based on the signal read by the first frame-angle reading section 43. The mode determining section 45 also determines that the second sensor 24 is functioning normally based on the signal read by the second frame-angle reading section 44. Since the second sensor 24 has a fault and exhibited deviation, the deviation between the signals from the two sensors does not fall in the normal range. As a result, the mode determining section 45 determines that a deviation fault has occurred. The mode determining section 45 selects the third mode when it determines that the first sensor 23 is functioning normally while the second sensor 24 is functioning normally, and that a deviation fault has occurred.

In State (6), the first sensor 23 has a fault and exhibited deviation, while the second sensor 24 has a fault and stopped functioning. In State (6), the mode determining section 45 of the controller 25 determines that the first sensor 23 is functioning normally based on the signal read by the first frame-angle reading section 43. The mode determining section 45 also determines that the second sensor 24 has a fault and stopped functioning based on the signal read by the second frame-angle reading section 44. Since the second sensor 24 has a fault and stopped functioning, the mode determining section 45 cannot determine whether a deviation fault has occurred, resulting in an unidentified determination. When determining that the first sensor 23 is functioning normally and that the second sensor 24 has stopped abnormally, the mode determining section 45 selects the second mode.

In State (7), the first sensor 23 has a fault and stopped functioning, while the second sensor 24 has a fault and exhibited deviation. In State (7), the mode determining section 45 of the controller 25 determines that the first sensor 23 has a fault and stopped functioning based on the signal read by the first frame-angle reading section 43. The mode determining section 45 determines that the second sensor 24 is functioning normally based on the signal read by the second frame-angle reading section 44. Since the first sensor 23 has a fault and stopped functioning, the mode determining section 45 cannot determine whether a deviation fault has occurred, resulting in an unidentified determination. When determining that the first sensor 23 has a fault and stopped functioning and that the second sensor 24 is functioning normally, the mode determining section 45 selects the second mode.

In State (8), the first sensor 23 has a fault and stopped functioning, while the second sensor 24 has a fault and stopped functioning. In State (8), the mode determining section 45 of the controller 25 determines that the first sensor 23 has a fault and stopped functioning based on the signal read by the first frame-angle reading section 43. The mode determining section 45 also determines that the second sensor 24 has a fault and stopped functioning based on the signal read by the second frame-angle reading section 44. Since the first sensor 23 has a fault and stopped functioning and the second sensor 24 has a fault and stopped functioning, the mode determining section 45 cannot determine whether a deviation fault has occurred, resulting in an unidentified determination. When determining that the first sensor 23 has a fault and stopped functioning and that the second sensor 24 has a fault and stopped functioning, the mode determining section 45 selects the third mode.

In State (9), the first sensor 23 has a fault and exhibited deviation, while the second sensor 24 has a fault and exhibited deviation. In State (9), the mode determining section 45 of the controller 25 determines that the first sensor 23 is functioning normally based on the signal read by the first frame-angle reading section 43. The mode determining section 45 determines that the second sensor 24 is functioning normally based on the signal read by the second frame-angle reading section 44. Since the first sensor 23 has a fault and exhibited deviation and the second sensor 24 has a fault and exhibited deviation, the deviation between the signals from the two sensors does not fall in the normal range. As a result, the mode determining section 45 determines that a deviation fault has occurred. When determining that the first sensor 23 is functioning normally while the second sensor 24 is functioning normally, and that a deviation fault has occurred, the mode determining section 45 selects the third mode.

The controller 25 stores the table between the recognitions of the controller in States (1) to (9) and the mode selections corresponding to them. The mode determining section 45 selects the mode to be executed according to the table.

When determining that both the first sensor 23 and the second sensor 24 are normally operating, the mode determining section 45 selects the first mode. This allows the frame angle to be accurately determined, reducing unintended steering speed limitations and mitigating impacts at the steering ends.

When the mode determining section 45 determines that either the first sensor 23 or the second sensor 24 has a fault and stopped functioning, it selects the second mode. Since sensor deviation faults are unlikely to occur, when one sensor is determined to be functioning normally, the impact at the steering end can be mitigated by relying on that sensor. Additionally, outside of the end range, steering can be performed with the same performance as in the first mode. However, in the second mode, as shown in States (6) and (7), considering the possibility that a deviation fault may occur in the sensor deemed to be functioning normally which potentially disables steering unintentionally, the steering speed is not excessively limited, allowing the steering to remain operable, through with slower reaction times.

When the mode determining section 45 determines that a deviation fault occurs in at least one of the first sensor 23 and the second sensor 24, it selects the third mode. In the case of a deviation fault, it becomes impossible to identify which of the two sensors has a fault, making it impossible to detect that the front frame 11 is located in the end range. When the mode determining section 45 determines that both the first sensor 23 and the second sensor 24 have failed and stopped functioning, it selects the third mode. When both sensors have failed and stopped, it is impossible to detect that the front frame 11 is located in the end range. In this way, when it is impossible to detect that the front frame 11 is located in the end range, selecting the third mode allows to setting a limit on the steering speed over the entire range. This helps mitigate the impact at the steering ends. It is possible to keep the steering operable over the entire range, though with slower reaction times compared to the first mode.

### <Operation>

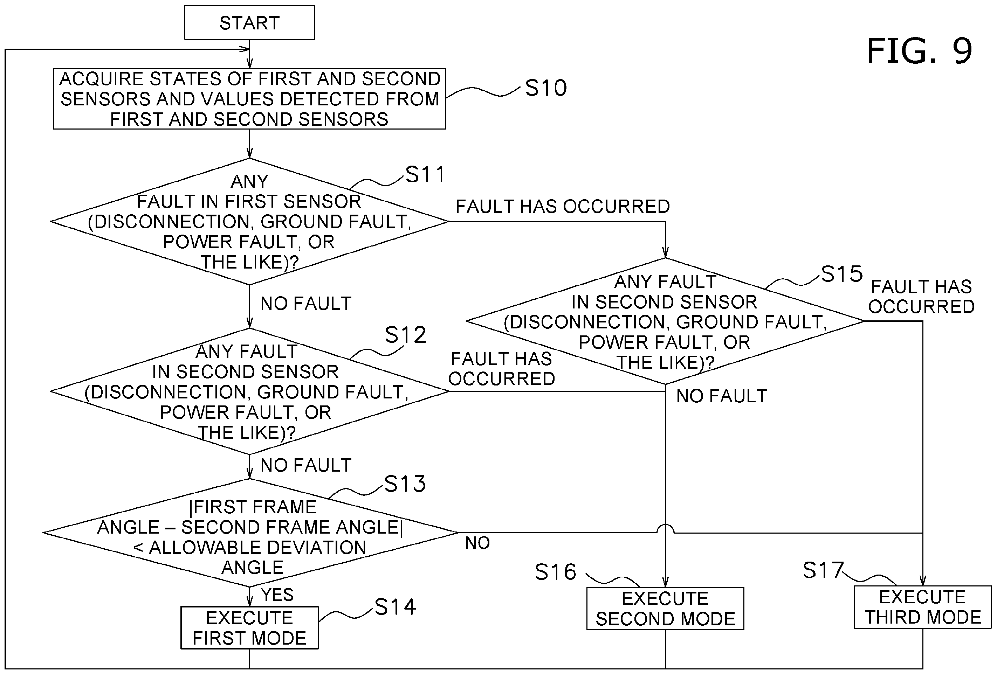

Next, a control operation for the work machine of Embodiment 1 will be described. FIG. 9 is a flow diagram illustrating the control operation of the work machine 1 of Embodiment 1.

First, in step S10, the first frame-angle reading section 43 reads a signal including the state and the detection value of the first sensor 23, and the second frame-angle reading section 44 reads a signal including the state and the detection value of the second sensor 24. Step S10 corresponds to an example of a fault state acquisition step.

In step S11, the mode determining section 45 determines whether a fault such as a disconnection, a ground fault, a power fault, or a sensor stoppage has occurred in the first sensor 23 based on the state of the first sensor 23.

When determining, in step S11, that no fault has occurred, in step S12, the mode determining section 45 determines whether a fault such as a disconnection, a ground fault, a power fault, or a sensor stoppage has occurred in the second sensor 24 based on the state of the second sensor 24.

When determining, in step S12, that no fault has occurred, in step S13, the mode determining section 45 determines whether a deviation fault has occurred in the first sensor 23 or the second sensor 24. Specifically, the mode determining section 45 determines that a deviation fault has occurred when the absolute value of the difference between the first frame angle detected from the first sensor 23 and the second frame angle detected from the second sensor 24 is equal to or greater than an allowable deviation angle, and determines that no deviation fault has occurred when the absolute value of the difference is less than the allowable deviation angle.

When determining, in step S13, that no deviation fault has occurred, the mode determining section 45 selects and executes the control of the first mode in step S14.

When it is determined, in step S11, that the first sensor 23 has a fault, the mode determining section 45 determines, based on the state of the second sensor 24, whether a fault such as a disconnection, a ground fault, a power fault, or a sensor stoppage has occurred in the second sensor 24 in step S15.

When it is determined, in step S15, that the second sensor 24 has no fault, the mode determining section 45 selects and executes the control of the second mode in step S16.

When it is determined, in step S15, that the second sensor 24 has a fault, the mode determining section 45 selects and executes the control of the third mode in step S17.

Also, when it is determined, in step S12, that the second sensor 24 has a fault, the mode determining section 45 selects and executes the control of the second mode in step S16.

When it is determined, in step S13, that a deviation fault has occurred, the mode determining section 45 selects and executes the control of the third mode in step S17. Steps S11 to S17 correspond to an example of execution steps.

As described above, in the work machine 1 of this embodiment, even when either one or both of the first sensor 23 and the second sensor 24 fail, the steering speed can be limited to a medium level as shown in the second mode or the third mode. As a result, the possibility can be reduced that the front frame 11 collides with the rear frame 12 with a large impact at a high speed.

On the other hand, even when a combination of undetectable faults occurs and the correct frame angle cannot be read, such as when a deviation fault occurs in the second sensor 24 while the first sensor 23 fails and stops, the steering speed is limited only to a medium level. As a result, even when a combination of undetectable faults occurs and the frame angle is misrecognized, a situation in which the steering is unintentionally disabled while driving the work machine has little chance to occur, and the steering can be operated at a medium speed at the very least.

As described above, even when the sensors fail, the occurrence possibility of a large impact caused by the collision of the front frame 11 with the rear frame 12 can be reduced, and also a situation in which steering is unintentionally disabled is barely expected to happen. Furthermore, although the intrinsic performance cannot be achieved, at least operable steering performance can be ensured, and the impact caused by the collision of the frames can be mitigated.

### (Embodiment 2)

Next, a work machine according to Embodiment 2 of the present disclosure will be described. The work machine according to Embodiment 2 has a different control configuration for the controller compared to the work machine according to Embodiment 1.

### <Configuration>

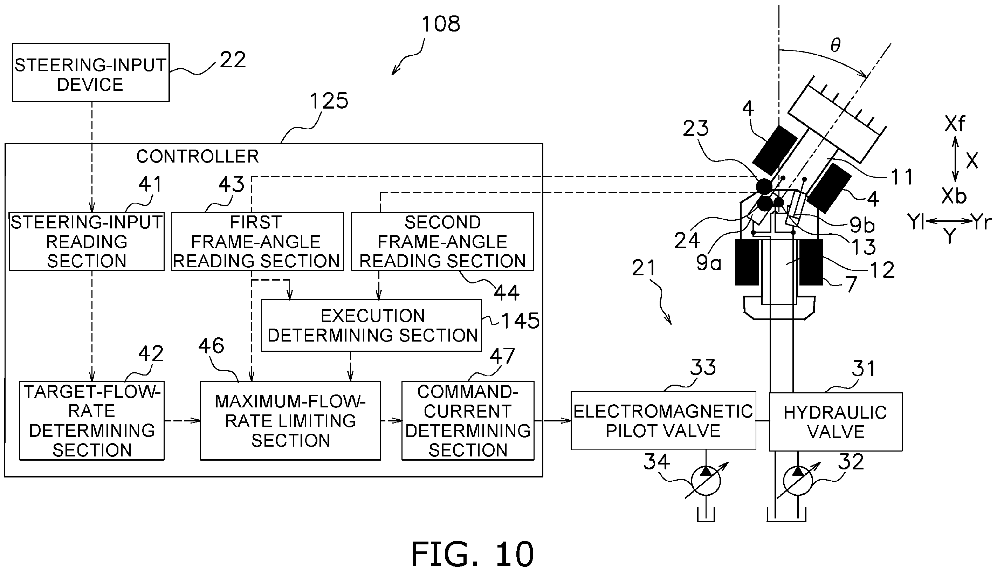

FIG. 10 is a diagram illustrating a configuration of a steering system 108 of Embodiment 2. The controller 125 of the work machine of Embodiment 2 has an execution determining section 145 instead of the mode determining section 45 of the controller 25 of Embodiment 1. The execution determining section 145 determines whether to execute the soft end-stop control based on the state of the first sensor 23 and the state of the second sensor 24.

The soft end-stop control is the same as in the first mode of the first embodiment. The execution determining section 145 of Embodiment 2 determines whether to execute the control of the first mode.

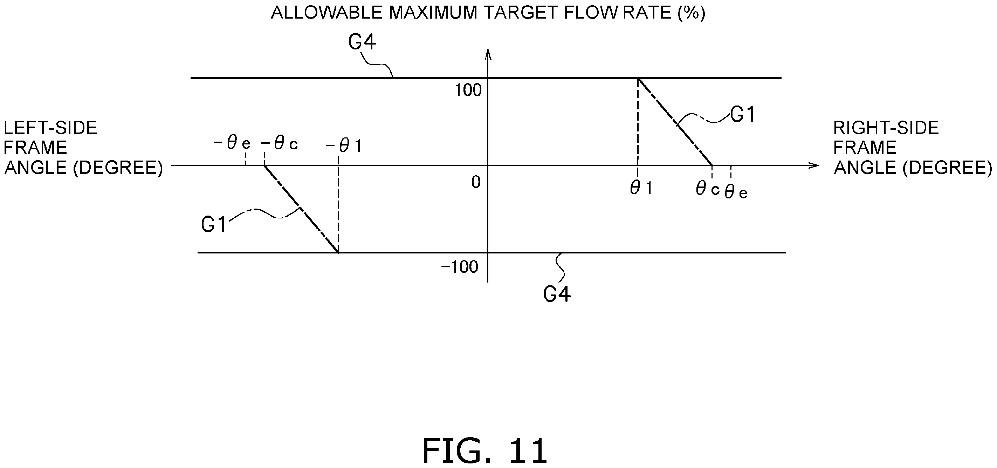

FIG. 11 is a diagram illustrating the allowable maximum target flow rates for the frame angles when the soft end-stop control is executed. The graph G1 with the execution of the soft end-stop control is shown by an alternate long and short dash line, and the graph G4 without execution of the soft end-stop control is shown by a solid line. As described above, the graph G1 with the execution of the soft end-stop control is identical to the graph G1 of the first mode shown in FIG. 4. When the soft end-stop control is not executed, the allowable maximum target flow rate is set to 100% over the entire rotatable range Ra, the maximum target flow rate is not limited, and the steering speed is not limited.

When the execution determining section 145 determines that at least one the first sensor 23 of the second sensor 24 has a fault and stopped and that a deviation fault has occurred, the execution determining section 145 does not execute the soft end-stop control. On the other hand, when the execution determining section 145 determines that both the first sensor 23 and the second sensor 24 are normally operating and that there is no deviation fault, it executes the soft end-stop control.

### <Operation>

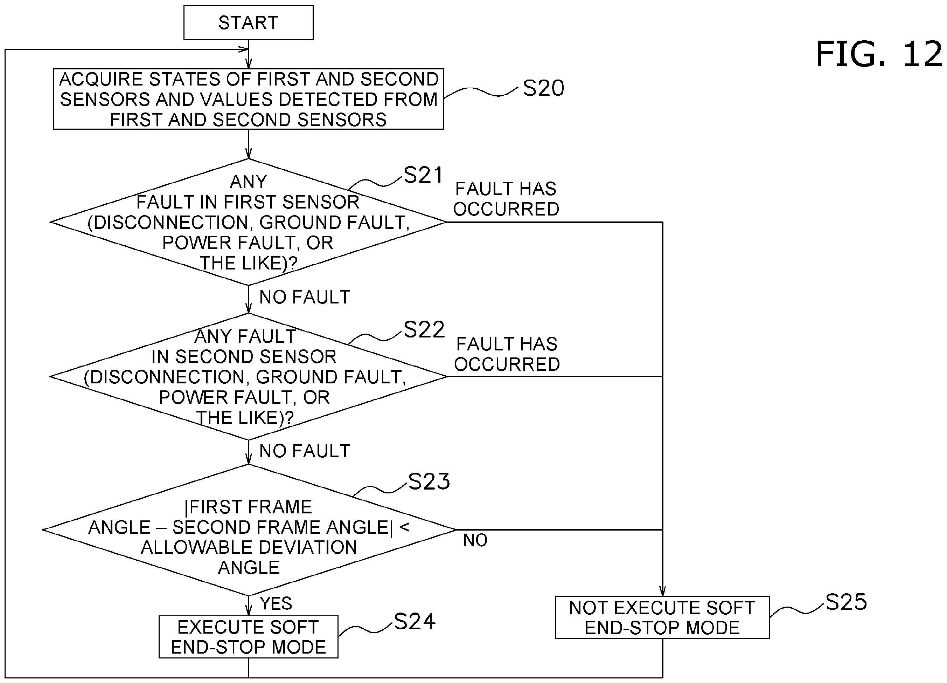

Next, a control method for the work machine of Embodiment 2 will be described. FIG. 12 is a flow diagram illustrating a control method for the work machine of Embodiment 2.

First, in step S20, the first frame-angle reading section 43 reads a signal including the state and the detection value of the first sensor 23, and the second frame-angle reading section 44 reads a signal including the state and the detection value of the second sensor 24. Step S20 corresponds to an example of a fault state acquisition step.

In step S21, the execution determining section 145 determines whether a fault such as a disconnection, a ground fault, a power fault, or a sensor stoppage has occurred in the first sensor 23 based on the state of the first sensor 23.

When determining, in step S21, that no fault has occurred, the execution determining section 145 determines whether a fault such as a disconnection, a ground fault, a power fault, or a sensor stoppage has occurred in the second sensor 24 based on the state of the second sensor 24 in step S22.

When determining, in step S22, that no fault has occurred, the execution determining section 145 determines whether a deviation fault has occurred in the first sensor 23 or the second sensor 24 in step S23. Specifically, the execution determining section 145 determines that a deviation fault has occurred when the absolute value of the difference between the first frame angle detected from the first sensor 23 and the second frame angle detected from the second sensor 24 is equal to or greater than an allowable deviation angle, and determines that no deviation fault has occurred when the absolute value of the difference is less than the allowable deviation angle.

When determining, in step S23, that no deviation fault has occurred, the execution determining section 145 executes the soft end-stop control in step S24.

When determining, in step S21, that the first sensor 23 has a fault, the execution determining section 145 does not execute the soft end-stop control in step S25.

When determining, in step S22, that the second sensor 24 has a fault, the execution determining section 145 does not execute the soft end-stop control in step S25.

When determining, in step S23, that a deviation fault has occurred, the execution determining section 145 disables the soft end-stop control in step S25. Steps S21 to S25 correspond to an example of an execution determining step.

As described above, in the work machine 1 of Embodiment 2, when it is determined that at least one of the first sensor 23 and the second sensor 24 has a fault and has stopped, or when it is determined that a deviation fault has occurred in the first sensor 23 or the second sensor 24, the soft end-stop control is not executed. This configuration makes it possible to prevent the soft end-stop control from being executed at unintended timings.

### <Other Embodiments>

One embodiment of the present disclosure has been described above. The present disclosure is not limited to the above embodiment, and various modifications are possible within the scope of the present disclosure.

(A) In Embodiment 1, the flow rate of the hydraulic oil supplied to the steering cylinders 9a and 9b at the frame angle ±θc is set to zero in the first mode, but it does not need to be zero, and it is sufficient for the flow rate to be reduced to be less than 100(%). However, the allowable maximum target flow rate at the frame angle θc needs to be set to a value smaller than the flow rate F1 in the second mode. In other words, it is sufficient that the allowable maximum target flow rate can be set so that the steering speed is more limited in the first mode than in the second mode.
(B) In Embodiment 2, when the soft end-stop control is not executed, no limitation is set on the allowable maximum target flow rate. The present invention, however, is not limited to this pattern, and for example, the allowable maximum target flow rate may be limited over the entire range, as in the third mode. That is, the execution determining section 145 of Embodiment 2 may execute the control in the first mode when the soft end-stop control is to be executed, and may execute the control in the third mode when the soft end-stop control is not to be executed.
(C) In the above embodiment 1, the allowable maximum target flow rate at the frame angle θc' in the second mode and the allowable maximum target flow rate over the entire range in the third mode are set to the same flow rate F1 (%), but they may be different.
(D) The work machine 1 in Embodiment 2 is equipped with two sensors, the first sensor 23 and the second sensor 24. It is sufficient, however, for the work machine 1 to have at least one sensor. The execution determining section 145 acquires the state of the one sensor, and when determining that the sensor has a fault, it does not execute the soft end-stop control, and when determining that the sensor is functioning normally, it executes the soft end-stop control.
(E) The work machine 1 in the above embodiment 1 is equipped with two sensors, the first sensor 23 and the second sensor 24. The present invention, however, is not limited to this structure. For example, three or more sensors may be mounted. Alternatively, only one sensor may be mounted. In the latter case, in order to detect a deviation fault, two or more signals need to be output from one sensor, and the controller 25 is required to acquire two or more signals from that sensor.
(F) In the above embodiment, the end range Rre (+θ1 to +θe) in the right direction and the end range Rle (-θ1 to -θe) in the left direction are set to the same angle range, but they may differ from each other. For example, the absolute value of the frame angle at the end of the rotatable range Ra in the right direction (|+0e| in the above embodiment) may be different from the absolute value of the frame angle at the end of the rotatable range Ra in the left direction (|-θe| in the above embodiment). Alternatively, the absolute value of the threshold determining the right-side end range (|+θ1| in the above embodiment) and the absolute value of the threshold determining the left-side end range (|-θ1| in the above embodiment) may be different.
(G) In the above embodiment, a wheel loader has been described as the work machine 1. The present invention, however, is not limited to wheel loaders and may be an articulated dump truck, motor grader, or the like.

### [Industrial Applicability]

The work machine and the control method for the work machine of the present invention provide the effects of reducing the possible occurrence of unintentional steering speed limitations when a sensor(s) in the work machine fails, and the present invention is useful as wheel loaders or the like.

### REFERENCE SIGNS LIST

- 1: Work machine
- 9a: Steering cylinder
- 9b: Steering cylinder
- 11: Front frame
- 12: Rear frame
- 22: Steering-input device
- 23: First sensor
- 24: Second sensor
- 25: Controller

## Claims

1. A work machine, comprising:
a first frame;
a second frame connected to the first frame, the second frame being rotatable within a predetermined angle range relative to the first frame;
an actuator configured to rotate the second frame relative to the first frame;
an operating member configured to input a rotational movement of the second frame relative to the first frame;
a first sensor configured to detect a rotation angle of the second frame relative to the first frame, and
a controller configured to execute a speed limit control, based on a fault state of the first sensor, to limit a rotation speed of the second frame in response to an input from the operating member, when the controller determines, based on a detection value of the first sensor, that the second frame is located within an end range of the predetermined angle range.

2. The work machine according to claim 1, further comprising:
a second sensor configured to detect a rotation angle of the second frame relative to the first frame, wherein
the controller determines that the second frame is located in the end range of the predetermined angle range based on a detection value of either the first sensor or the second sensor in the speed limit control, and
the controller executes the speed limit control based on a fault state of the first sensor and a fault state of the second sensor.

3. The work machine according to claim 2, wherein
the speed limit control includes a first control and a second control that imposes a less limit on the rotation speed than the first control,
the controller executes the speed limit control by applying the first control when the controller determines that no fault has occurred in both the first sensor and the second sensor, and
the controller executes the speed limit control by applying the second control when the controller determines that a fault has occurred in only one of the first sensor or the second sensor.

4. The work machine according to claim 2, wherein
the speed limit control includes a first control and a second control that imposes a less limit on the rotation speed than the first control, and
the controller executes the speed limit control using the first control or the second control when a difference between a detection value of the first sensor and a detection value of the second sensor is less than a predetermined threshold value.

5. The work machine according to claim 2, wherein
the controller executes a third control to limit the rotation speed over an entire of the predetermined angle range when the controller determines that both the first sensor and the second sensor have failed or when a difference between a detection value of the first sensor and a detection value of the second sensor is more than or equal to a predetermined threshold value.

6. The work machine according to claim 1, further comprising:
a valve configured to change an amount of hydraulic oil supplied to the actuator in response to an operation of the operating member, wherein
in the speed limit control, the controller control limits the rotation speed by controlling the valve to limit a maximum value of an amount of hydraulic oil that is suppliable to the actuator.

7. The work machine according to claim 3, further comprising:
a valve configured to change an amount of hydraulic oil supplied to the actuator in response to an operation of the operating member, wherein
in the first control, the controller controls the valve so that a maximum value of an amount of hydraulic oil that is suppliable to the actuator decreases gradually in the end range toward an end of the end range, and the maximum value becomes zero before the end,
in the second control, the controller controls the valve so that a maximum value of an amount of hydraulic oil that is suppliable to the actuator decreases gradually in the end range toward an end of the end range, and the maximum value becomes a predetermined value above zero before the end.

8. The work machine according to claim 5, further comprising:
a valve configured to change an amount of hydraulic oil supplied to the actuator in response to an operation of the operating member, wherein
in the third control, the controller limits the rotation speed by limiting a maximum value of an amount of hydraulic oil that is suppliable to the actuator to a predetermined value over an entire of the predetermined angle range.

9. A control method for a work machine including a first frame, a second frame connected to the first frame and rotatably connected within a predetermined angle range relative to the first frame, an actuator configured to rotate the second frame relative to the first frame, and an operating member configured to input a rotational movement of the second frame relative to the first frame, the control method comprising:
a fault-state acquisition step of acquiring a fault state of a first sensor configured to detect a rotation angle of the second frame relative to the first frame; and
an execution step of executing a speed limit control, based on a fault state of the first sensor, to limit a rotation speed of the second frame in response to an input from the operating member when it is determined, based on a detection value of the first sensor, that the second frame is located in an end range of the predetermined angle range.
